# EUROPEAN PATENT SPECIFICATION

(11) **EP 2 910 686 B1**
(45) Date of publication and mention of the grant of the patent: **31.10.2018**
(21) Application number: 15156618.9
(22) Date of filing: 25.02.2015
(51) Int. Cl.: E02B 17/02, E02B 17/00, E04H 12/08, F16L 19/065, F03D 13/25

(54) **IN-LINE CONNECTION FOR AN OFFSHORE ONSTRUCTION; OFFSHORE CONSTRUCTION; METHOD FOR INSTALLING**
IN-LINE-VERBINDUNG FÜR EINE OFFSHORE-KONSTRUKTION, OFFSHORE-KONSTRUKTION UND INSTALLATIONSVERFAHREN
CONNEXION EN LIGNE POUR UNE CONSTRUCTION OFFSHORE; CONSTRUCTION OFFSHORE; PROCÉDÉ D'INSTALLATION

(30) Priority: 25.02.2014 NL 1040683
(43) Date of publication of application: 26.08.2015
(73) Proprietor: KCI the engineers B.V., 3125 AE Schiedam (NL)
(72) Inventor: van Gelder, Klaas Boudewijn, 3125 AE Schiedam (NL)
(74) Representative: V.O.

(56) References cited:
- EP-A1- 2 772 587
- DE-U1-202006 011 099
- US-A- 2 772 100
- US-A- 4 245 928
- US-A1- 2003 085 573

## Description

### FIELD OF THE INVENTION

The invention concerns an in-line connection of first element, such as a pile, having an upper end and a second element, such as a superstructure, having a lower end. More in general, the invention relates to an assembly comprising a lower pile having an upper end and an upper superstructure having a lower end, the pile and superstructure being connected to each other. For example, the invention relates to the connection of a superstructure to a foundation pile.

### BACKGROUND TO THE INVENTION

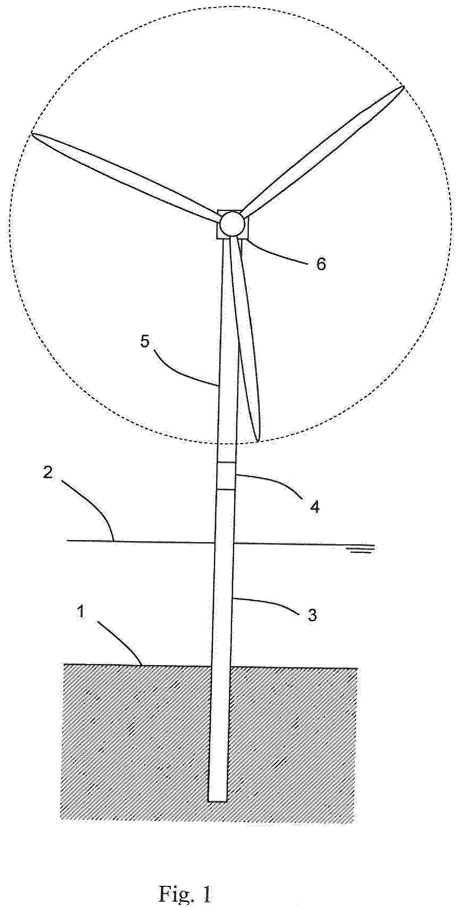

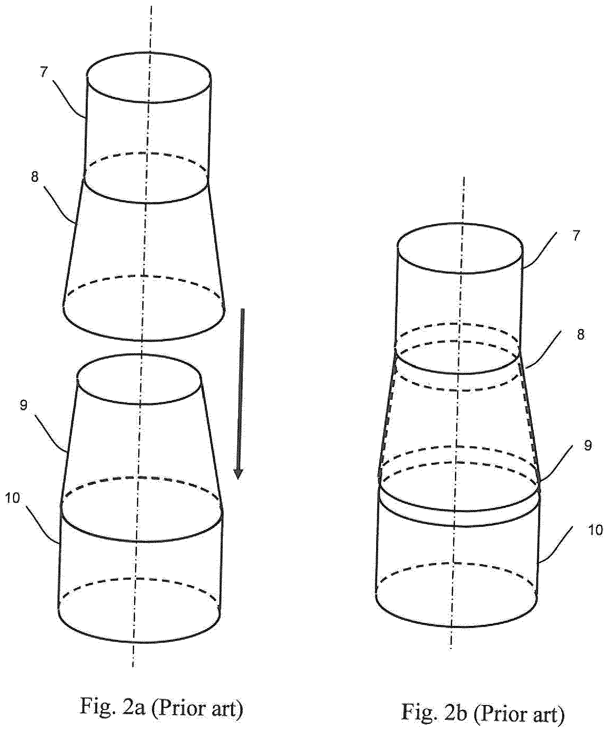

A similar connection is known from the prior art as a so called "slip joint", used to connect the two circular sections of a wind turbine tower and a steel foundation pile. The tower, nacelle and turbine rotor of the wind turbine are placed on the foundation structure. The foundation is a so called "mono-pile", and comprises a tubular pile driven in the soil, in case of an offshore location, the seabed. The slip joint connection has been applied by the Dutch company Windmaster, who installed several relatively small onshore wind turbine with a power rating of 750 kW. The diameter of this connection was 2,2 meter. In figure 1 and 2 the connection principle is shown, comprising two conical parts with a small tapering angle approximately one to two degrees and surfaces with an overlapping length "L" of approximately one to two times the pile diameter "D". The conical parts are connected with an axial compression force generated by the weight of the upper structure and if required by additional means, e.g. temporary extra weight in the turbine tower or by a vibrating machine, such that radial loads and friction are developed because of the tapered shape, such that the outer cone is in tight normal pressure contact with the inner cone. After installation the operational loadings are transferred through the connection by a combination of forces normal to the contact surface and friction forces.

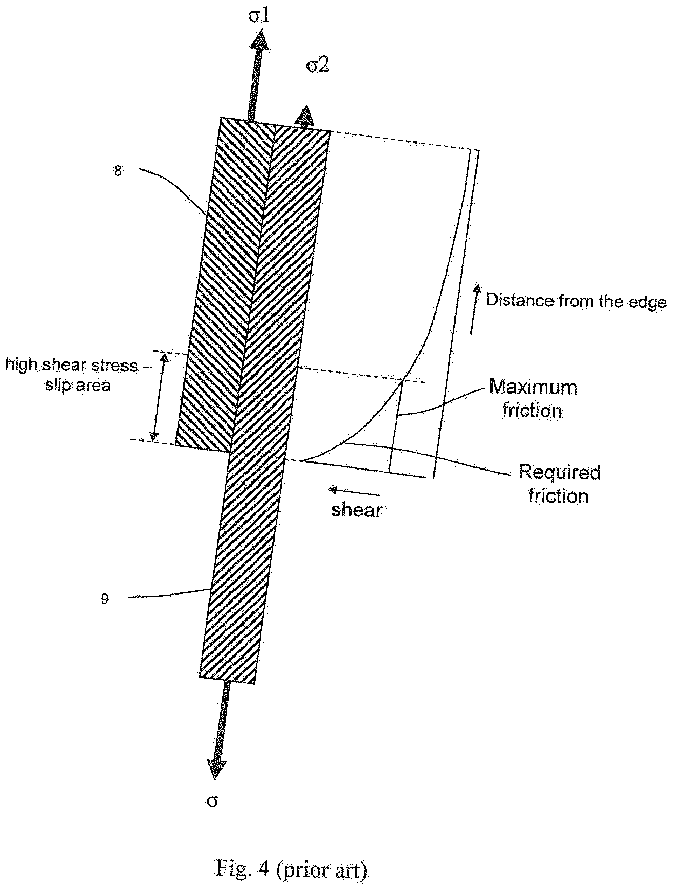

A disadvantage of the slip joint is that the manufacturing of large diameter conical sections within required fitting tolerances is difficult and adds significant cost. The size of the cones is larger than the available sizes of standard plate materials required for construction. The cones are therefore built from several flat plates which are accurately bent by rolling into a conical shape and accurately profiled and aligned and welded together, after which the welds are to be grinded to form smooth contact surfaces. These activities are complicated, time consuming and expensive. Even at the best achievable manufacturing accuracy, the two cone surfaces are not in contact over the full area and the contact pressure distribution and friction force distribution between the two cones over the contact surfaces can not be accurately predicted from design calculations. This means that the effect of constantly varying operational loadings of the connection by wind and waves, especially the transfer of these loadings to the foundation through the slip joint is uncertain and results in unpredictable stress concentrations. Under the influence of constantly varying loads, repetitive local slipping of the surfaces occurs, causing fretting damage. It is known that the consequences of fretting of metal surfaces include wear-off, corrosion and initiation of fatigue failure due to cracks of the surface materials. These properties of the slip joint are disadvantageous, as the reliability of the connection over its service life is uncertain. In the last years, the power of large offshore wind turbines is over 6000 kW rating per installation and in the near future the size is expected to scale up further. As a result the foundation pile diameter increases to over 5 meter and plate thickness of the slip joint cones also increase proportionally. The larger size further increases the risks and uncertainties of design and manufacturing described above. Moreover the access for regular inspection of the slip joint, and the eventual repair is more difficult and costly, especially in an offshore situation.
Another disadvantage of the slip joint is that, even for high fitting tolerances and axial pre-stressing of the conical surfaces, a mechanical characteristic of this arrangement is that transfer of friction forces concentrate at the edges of the contact surfaces, typically within a distance from the edges of two times the smallest wall thickness of the two cones, as shown in figure 4. A large portion of the cones contact area does not effectively contribute to the transfer of friction loads. As a consequence, repetitive slipping of the contact surfaces occurs under the varying loads of the turbine. Fretting damage can start at areas of low contact pressure or high friction loads, the latter initiated especially at the edges of the cones and progressing further from the edges. Another set-back of the slip joint connection is that the axial alignment of the two cones is fixed and does not allow for correction of the verticality of the turbine tower in case the foundation pile has been installed outside the tolerance of verticality. The installation tolerance of verticality of the turbine tower is typically ± 0.5 degrees, which is hard to achieve, especially in offshore conditions. If the verticality is out of tolerance, corrective measures, for example re-installation of the pile, will be expensive. An example of such a connection between pile members, wherein additionally the gap above the connection is filled with filler material, is described in US 4245928.

DE 202006011099 discloses a telescopic mast having tubular pipe sections that are telescopically mounted to each other. The inner pipe section is provided with two conical rings. The outer lower pipe section is provided with a flange. To the flange, another flange is being connected that provides for the opening of the upper inner pipe section. To the flange bolts are provided with two height adjustable conical rings on them. The height adjustable conical rings correspond with the conical rings and their conical surfaces contact. By fastening the bolts the connection is made.

### SUMMARY OF THE INVENTION

It is an object of the invention to remove one or more of the above disadvantages and to provide for an improved in-line connection.
Thereto, the invention provides for an assembly as defined by claim 1, a pile as defined by claim 6, a method as defined by claim 7 and an offshore structure as defined by claim 8. The present disclosure provides, inter alia, for a connection between a first element, such as a pile, having an upper end and a second element, such as a wind turbine tower, having a lower end, that are to be engaged with each other, wherein the upper end of the first element is provided with aa conical ring that is conically shaped at one side and the lower end of the second element is provided with a conical ring that is conically shaped at one side, such that when engaging the upper end and the lower end, the conical sides of the conical rings contact each other, wherein the lower end and the upper end each comprise two conical rings positioned approximately parallel to each other and at equal distance with respect to each other.

By providing at least two conical rings at the upper end and the lower end respectively, the contact area between the upper end of the first element, such as a foundation pile, and the lower end of the second element, such as a superstructure, can be determined to the conical sides of the conical rings. Thus, the contact area can be restricted to the height of the conical sides, which is smaller than the overlapping length of the upper end and the lower end, instead of, as in the slip joint of the prior art, the contact area is equal to the overlapping length the whole conically shaped ends of the pile and superstructure. Further, by providing two conical rings above each other, the connection can take bending moments.

More advantageously, the height of the conical ring is less than 1/4^{th} of its diameter, such that the height of the ring is relatively small with respect to the upper end and/or lower end, and/or with respect to the overlapping length. Contrary to the prior art of the slip joint, the contact area between the conical sides can thus be limited, which is advantageous for manufacturing and/or installation and/or weight etc. For example, when providing two or more rings parallel at a distance of each other, the contact area, between the two or more relatively small conical rings, is relatively small with respect to the overlapping length.

By providing a conical ring as such, the ring can be advantageously connected to the upper end and/or to the lower end, providing for ease of manufacturing and/or a cost-effective connection.

In particular, when machining the conical sides within available manufacturing tolerances, it can be achieved that the contact between the conical sides can be over a relatively smooth contact area and that, advantageously, surface contact may be obtained. To obtain a surface contact between the conical sides, preferably the conical sides have a well-defined surface and have approximately the same circumference. A well-defined surface may be obtained by e.g. machining, extrusion, milling, rolling, casting and/or other known manufacturing techniques to provide for a smooth surface within tolerances cost-effectively. An approximately same circumference between the conical sides that are to be contacted with each other may be important to provide for surface contact over the majority of the conical sides, any small un-roundness may be evened out when engaging both conical sides. Preferably, after installation, the axial center lines of the first element and the second element are approximately in-line with each other to provide for optimal force transmission.

Since the upper end and the lower end are engaging with each other, the overlapping length is typically the length that the upper end and the lower end overlap when engaged.

Advantageously, the conical rings are conical shaped at one side to ensure a firm contact between the conical sides of the conical rings. The conical side of the ring has a wall that is tapered with respect to a central axis of the conical ring, as seen in a direction along the central axis. The angle of the tapered side may be between approximately 0,5 degrees and approximately 8 degrees, more preferably between approximately 0,5 degrees and approximately 5 degrees. A limited angle of the conical sides is sufficient to have the lower end of the upper second element engage with the upper end of the lower first element. Advantageously, the conical side of the conical ring on the upper end of the lower first element tapers upwardly and the conical side of the conical ring of the lower end of the upper second element tapers downwardly such that when engaging the conical sides they fit smoothly over each other to contact each other.

It is noted that the first and/or the second element do not need to be tubular. Also, the upper end and the lower end respectively do not need to be tubular, but preferably have matching and/or congruent cross-sectional shapes. Advantageously, the upper end and the lower end are tubular, in view of ease of manufacturing and in view of ease of connection of the conical rings to the upper end and lower end respectively. Also, the conical rings do not need to be tubular, but can have a shape similar to and/or congruent with the shape of the upper and the lower end respectively. Advantageously, the conical rings may be tubular as well, in view of ease of manufacturing and/or load carrying capacity.

In a not claimed embodiment, a single ring on both the upper end and the lower end may be provided. However, in other embodiments, two or more rings parallel to each other may be provided, depending on forces, operational loads, weight of the superstructure etc. By providing two rings, or more conical rings parallel to each other, the connection can take also bending moments. A single conical ring may not withstand bending moments, but can be very well applicable on the connection of a superstructure having four to six legs for example. Then, a single conical ring for the connection on each leg may be provided.

Advantageously, the conical rings are provided as a wall part of the tubular end parts such that the tubular sides of the conical rings are level with the tubular wall of the tubular ends. Then, the conical rings can easily be inserted into e.g. a circumferential cut, or a top/bottom side, of the tubular ends and welded to the tubular ends at an upper side and/or a lower side of the conical rings. The weld is preferably a relatively strong weld, e.g. a full penetration weld, or any other type of weld, which can be subject to high forces. As such, a strong connection between the conical rings and the tubular ends can be obtained. As such, the manufacturing may be simplified as then the conical rings can be manufactured separate from the tubular ends and can be connected to the tubular ends later.

The conical side of the conical ring of the upper end may be at an outer side of the upper end of the lower first element, then the conical side of the conical ring of the lower end may be at the inner side of the lower end of the upper second element, such that when engaging, the second element fits over the first element. In another embodiment, this arrangement can be vica versa. So, the conical side of the conical ring of the upper end may be at an inner side of the upper end of the lower first element, then the conical side of the conical ring of the lower end may be at the outer side of the lower end of the upper second element, such that when engaging, the second element fits in the first element.

Upon installation of the second element over or in the first element, the second element is moved towards the first element, and can, in an embodiment, be pushed by means of axial force over/in the first element, such that a pre-stressing occurs. Advantageously, in use, a permanent pre-stressed contact pressure is present perpendicular to the conical contact sides, then a stable end situation is present on the connection. Such a stable end situation can be achieved by providing axial force during installation and/or by setting of the connection during an initial post-installation period.

After installation, the conical contact sides may further 'set' with respect to each other until they firmly fit. Thus, after installation, there will be an initial setting period, in which the conical sides due to environmental loads for example, or temporary additional weights for example, will further slide with respect to each other and as such the clamping of the conical sides may become more firmly until they are firmly and fixedly engaged to each other.

Alternatively and/or additionally, during installation a significant axial force may be applied to push the second element in/over the first element, e.g. by a pulsating force, or by gravity by letting the second element 'falling' in/over the first element etc.

The contact area of the tubular upper and lower ends is restricted to a contact area between an outer conical ring and an inner conical ring with matching conical contact surfaces in the circumference near the top of the overlapping length and a contact area between an outer ring and an inner ring with matching conical contact surfaces near the bottom of the overlapping length.

The narrow section of tapering of the conical sides can be at the top of the conical rings mounted on the upper end, and can be at the bottom of the conical rings mounted at the lower end, such when the second element, e.g. the superstructure, is placed over the conical ring attached to the first element, e.g. the foundation pile the conical sides engage with each other over their surface. Also, in this arrangement, the conical ring of the upper end has its conical side at an outer side and the conical ring of the lower end has its conical side at an inner side. In this arrangement the ingress of water and dirt in between the cones after installation is minimized.

Alternatively, the conical ring of the upper end has its conical side at an inner side and the conical ring of the lower end has its conical side at an outer side. In this case the contact surface of the foundation pile is at the inside of the first and second elements, such as the pile, which simplifies the preservation of the contact surfaces by a temporary cover at the open end of the pile, which may be advantageous, for example if the foundation pile is pre-installed before the upper structure for a long period.

In an embodiment with two sets of rings, one at the top and one at the bottom of the connection, the axial length of the ring contact surface at the top and at the bottom of the overlapping length L of the connection, is much smaller than the overlapping length L. The size of the conical rings forming the contact surfaces is therefore much smaller than the prior art slip joint of Windmaster.

Because of this small size, the rings can be produced by steel casting or by rolling a steel strip. The size is also within capacity of standard rotating cutting machining tools, whereby final shaping of the contact surfaces is within much more accurate tolerances than conically rolled plates. As a consequence of the small size and accurate tolerances, the surface areas are in full contact, the contact loads are well defined, and the transfer of loads is restricted to these two separated ring contacts. The other structural parts of the connection structure can be made from cylindrically rolled plate instead of conically rolled plate, which is a simpler manufacturing method and dimensional tolerances are less critical. During installation of the turbine tower, the contact pressure of the contact surfaces is increased as the connection is compressed axially due to the weight of superstructure, e.g. the tower and turbine nacelle and rotor of a wind turbine. Additional compression by temporary means can be applied, if required, for example by adding temporary weight or using a vibrating machine. A radial load and tangential hoop stress in the rings is generated due to this axial compression. The resulting pre-stressed condition of the conical contact rings and the accurate fit of the ring surfaces enable designing such that the contact pressure is predictable and smoothly distributed over the surfaces. Also the tangential hoop stress of the rings is predictable. As a consequence of pre-stressed condition and the smooth distribution of contact pressure, local slipping of areas with low contact pressure, as in the slip joint design, do not exist and potential damage due to fretting does not occur. The geometry of the connection and pre-stressed condition can be made such that in case incidental sliding occurs due to an extreme load, the direction of sliding of the tower is downward. This means that the pretension increases by extreme loads and further sliding is avoided. The diameter and wall thickness of the inner tube and outer tube in between the ring contact surfaces are dimensioned such that friction forces between the contact surfaces due to bending of the connection are minimized. This is achieved by designing approximately equal elastic moments of inertia for bending of the tubes. As a result the repetitive slipping of the surfaces under varying loads and fretting problems do not occur.

In a not claimed embodiment one of the two tapered conical surfaces at the top is provided with vertically moveable wedges in the circumference. In this embodiment the verticality of the turbine tower and the alignment of the two tubes can be corrected by the adjustment of the vertical position of the wedges. This adjustable feature of the connection eliminates or at least reduces the potential risk of installing the foundation pile outside the tolerance of verticality.

In another not claimed embodiment a lubricant is used to reduce the dynamic friction of the slip movement during installation of the connection. The effect is that the normal forces increase. After installation the effect of low friction due to the lubricant is unwanted and will disappear as the thin fluid film is pressed away by the contact pressure. Alternatively an unwanted effect of low friction due to the lubricant after installation can be stopped by using lubricant hardening by a chemical reaction.

The present disclosure further relates to a connection of a vertical tubular foundation pile with an upper construction by tubes sliding into each other having an overlapping length, wherein the contact area is limited to a circular contact near the top of the overlapping length, comprising a conical outer ring and a conical inner ring matching into each other, and a circular contact near the bottom of the overlapping length, also comprising a conical outer ring and a conical inner ring matching into each other.

In another aspect of the present disclosure, the outer ring at the top and the inner ring at the bottom are connected by a cylindrical tube and wherein the inner ring at the top and the inner ring at the bottom are connected by a cylindrical tube.

Additionally, in an aspect of the present disclosure, the connection is compressed axially with force, for example by means of the weight of the upper construction or by means of temporary static or pulsating force, such that a permanent pre-stressed contact pressure is created perpendicular to the contact areas between the outer rings and the inner rings, that is so large that the contact areas do not slide with respect to each other due to operational loads on the connection.

In another aspect of the present disclosure, one of the two conical rings matching into each other are divided in a number of wedge-like segments that are independently vertically movable, such that the vertical angle of the upper construction is adjustable with respect to the foundation pile.

In another aspect of the present disclosure, the wedge-like segments are pushed with force into each other, such that a permanent pre-stressed contact pressure is created perpendicular to the contact areas, that is so large that the contact areas do not slide with respect to each other due to operational loads on the connection.

Further, the present disclosure also relates to a first element, such as a pile, and to a second element such as a superstructure.

The superstructure may be a wind turbine, a meteorological measurement tower, a power transformer platform, an offshore platform, e.g. an oil or gas producing platform, or any other platform provided with a connection with conical rings. The platform as second element may be positioned on a substructure as first element comprising a single pile or a multi-legged substructure, e.g. a four or six legged jacket.

Further, the present disclosure also relates to a transition piece comprising the upper end and the lower end. The upper end and the lower end may thus form part of the first and/or second element, but may also be part of a separate 'intermediate' piece, also called a transition piece. The transition piece, in particular the lower end thereof, may be provided with a flange at an upper side of the lower end. On the flange the superstructure may then be connected, e.g. by means of bolts. Alternatively, also for the connection of the superstructure to the transition piece, the connection according to the present disclosure may be used.

The invention also relates to a method for making a connection of a foundation pile with an upper construction by means of a connection with conical rings, as defined by claim 7.

### BRIEF DESCRIPTION OF THE DRAWINGS

Further explanation of the invention will be given by means of figures below, which will give a practical embodiment of the invention, but may not be considered in a limiting sense, wherein:
Figure 1 shows a side view of a general arrangement and the main parts of an offshore wind turbine;
Figure 2a and 2b show a slip joint according to the prior art before connection and after connection;
Figure 3 shows a side view of cross section of a slip joint according to prior art;
Figure 4 shows a detail A from the figure 3 according to prior art;
Figure 5 shows a side view of a cross section of an assembly comprising rings with conical contact surfaces according to the invention;
Figure 6a and 6b show a top view of a cross section of the two upper conical rings of the assembly according to the invention;
Figure 7 shows a side view of a cross section of a connection with adjustable wedges; and
Figure 8 shows a top view of a cross section of a connection with adjustable wedges.

### DETAILED DESCRIPTION

It is noted that the figures are only schematic representations of embodiments of the invention that are given by way of non-limiting example. In the figures, the same or corresponding parts are designated with the same reference numerals.

The offshore turbine presented in figure 1 shows a general arrangement of an offshore turbine installed in the sea bottom (1), the sea water level (2), the foundation pile (3) which is installed in the sea bottom (1), the connection (4) between the foundation pile (3) and the wind turbine tower (5) and the turbine nacelle and rotor (6). The connection (4) may be provided as a transition piece.

The slip joint (4) presented in figure 2, provides for a connection (4) between the pile (3) and the tower (5). Figure 2 shows the bottom part of the turbine tower (7), the upper conical part (8) of the slip joint, the lower conical part (9) of the slip joint and the upper part of the foundation pile (10). The accuracy of the geometrical fit of the cones surfaces determines how mechanical loads from the turbine are transferred to the foundation.

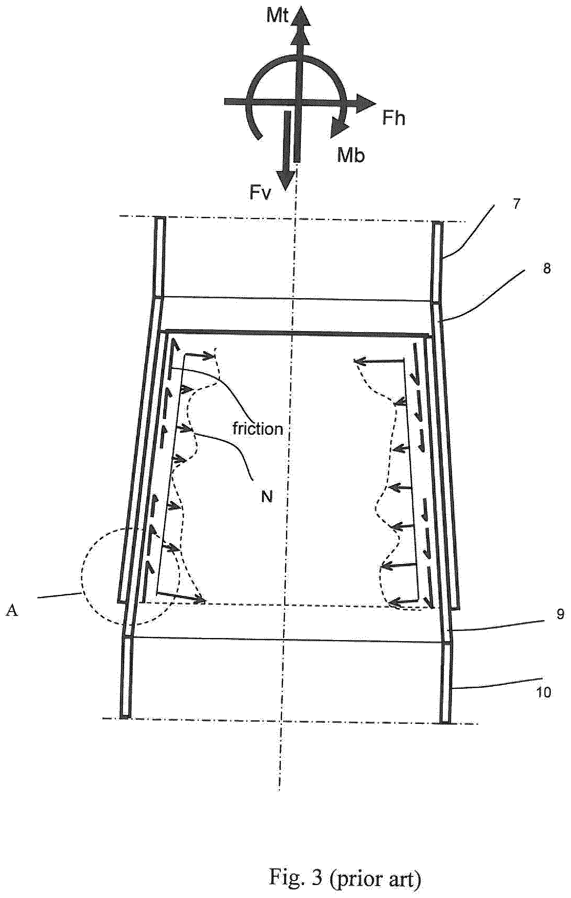

Figure 3 shows how the distribution of the normal contact pressure (N) and the distribution of the shear stress caused by friction (f) between the upper conical part (8) and the lower conical part (9). The varying length of the arrows indicate the varying contact pressure and friction over the contact surface between the cones as a result of geometrical imperfections. The loads acting at the connection by the turbine are represented by the thick arrows at the top, comprising the components of the vertical force (Fv), the horizontal force (Fh), the bending moment (Mb) and the torsion moment around a vertical axis (Mt). All load components vary in time in a wide range of frequencies typically between 1/100 Hz to 10 Hz. One detail (A) at the edge of a cone is indicated by the circle, which is shown in Figure 4.

In figure 4 the detail (A) is enlarged showing the transfer of friction forces between two plates (8, 9) if loaded by an in-plane stress (σ) at the bottom which is in balance with the two in plane stresses (σ1, σ2) at the top. The axial stress (σ) is transferred from plate (9) to (8) by friction forces between the plates. The curve shown at the right hand side indicates the high concentration of friction close to the edge, which rapidly reduces further away from the edge. Also the axial stress (σ2) in plate (9) reduces further away from the edge. The high friction occurs in an area of about 2 times the thickness of the plates and initiates slipping at the edges. Cyclic axial loading can cause slipping of the surfaces and fretting damage due to this stress condition with a high concentration of friction at the edge.

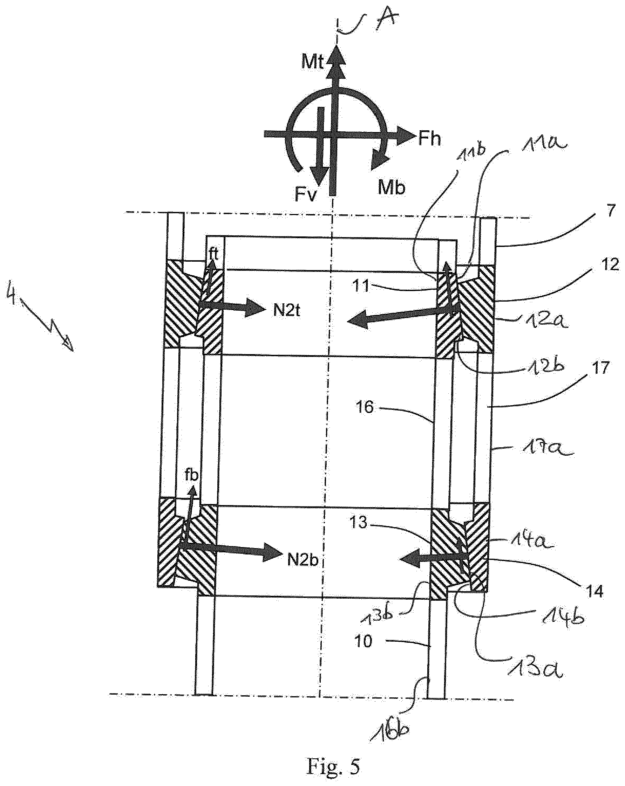

In figure 5 the connection (4) is shown in an assembly according to the invention.

In figure 5 the connection (4) is shown as a connection between a first element 10, such as a foundation pile, and a second element 7, such as a superstructure. The first element 10 has an upper end 16 and the second element has a lower end 17. The upper end 16 and the lower end 17 are engaged with each other to form the connection 4. Here, the lower end 17 is positioned over the upper end 16, but alternatively, the lower end 17 may be inside of the upper end 16. According to the invention, the foundation pile 10 and the upper structure 7 are provided with conical rings 11, 12, 13, 14. In this embodiment, the upper end 16 is provided with two conical rings 11, 13 and the lower end 17 is provided with two conical rings 12, 14, wherein the conical rings 11, 13 of the upper end and the conical rings 12, 14 at the lower end are at equal distance from each other. In other embodiments, a single conical ring per end, for example when no or limited bending moments are present, or more than two conical rings per end may be provided.

In the embodiment of figure 5, the upper end 16 and the lower end 17 are tubular shaped and straight-walled, however, this is not necessary. In fact the shaped of the side opposite the conical side is less relevant for the function of the conical ring. More important may be that the center lines A of the conical rings 11, 12, 13, 14 and of the first and second elements are in-line with each other.

The conical rings 11, 12, 13, 14 are here provided as a tubular ring with one side conically shaped. By providing the conical ring 11, 12, 13, 14 also tubular together with a tubular upper 16 and lower end 17, the conical ring can be fitted easily to the tubular upper and lower end, e.g. by welding, which may be cost-effective for manufacturing.

In the embodiment shown in figure 5 are the outer walls 11a, 13a conically shaped, i.e. the outer walls are tapered with respect to the central axis A of the conical rings 11, 13. Then, the rings 11, 13, can easily be connected to the tubular upper end 16, such that a central axis A of the conical rings 11, 13 is in-line with the central axis of the first element 10.

The conical rings 12, 14 provided on the lower end 17 have an outer wall 12a, 14a that is straight-walled and is, after connection of the conical rings 12, 14 to the lower end 17, approximately level with the outer wall 17a of the lower end 17. However, this is merely an example, the outer walls 12a, 14a can have any other shape. The conical rings 12, 14 are at the inner sides 12b, 14b conically shaped. In an other embodiment, the conical sides of the conical rings may be vice versa.

The outer walls 11a, 13a of the conical rings 11, 13 of the upper end are tapered upwardly, such that an upper side of the conical rings 11, 13 is narrower than the lower side thereof. The inner walls 12b, 14b of the conical rings 12, 14 are tapered downwardly, such that an upper side of the conical rings 12, 14 is wider than the lower side thereof. By doing so, the conical rings 12, 14 fit smoothly over the conical rings 11, 13.

When positioning the lower end 17 over the upper end 16, the conical sides 11a, 12b, 13a, 14b contact each other and provide for a firm coupling between the conical rings 11, 12 and 13, 14 respectively and thus between the lower end 17 and the upper end 16.

The connection 4 between the first element 10 and the second element 7 is established by surface contact between the conical sides 11a, 12b and 13a, 14b. According to the invention, the height of the conical rings 11, 12, 13, 14 is smaller than the height of the overlapping length L, which typically is the axial length over which the upper end 16 and the lower end 17 overlap, in use. More advantageously, the height of the conical ring 11, 12, 13, 14 is less than 1/4^{th} of its diameter, in particular of the smallest diameter, i.e. the diameter of the conical ring that fits, in use, inside of the matching conical ring. Such a relatively small conical ring may provide for advantageous and/or cost effective manufacturing, while at the same time providing for sufficient surface contact between the conical sides.

In figure 5 the foundation pile (10) and the tower (7) are connected by conical rings (11, 12, 13, 14) which are axially loaded by a vertical force (Fv) of the weight of the upper structure 7, comprising for example a superstructure composing of a tower, nacelle and rotor, and eventually extra vertical load of a temporary weight or a dynamic load of a vibrating machine. As in figure 3 the turbine loads are shown comprising the components of the vertical force (Fv), the horizontal force (Fh), the bending moment (Mb) and the torsion moment (Mt).

The conical rings 11, 12, 13, 14 are preferably made from a cylindrically rolled plate having a relative large wall thickness, of which the conical side is then machined to the desired tolerance and accuracy. Preferably, the angle of the conical sides 11a, 12b, 13a, 14b with respect to the central axis A is relatively small, between approximately 0,5 degree and approximately 8 degrees, advantageously between approximately 0,5 degree and approximately 5 degrees, more advantageously between approximately 0,5 degree and approximately 3 degrees.

The other structural parts, upper end and lower end (16, 17) of the connection structure are preferably made from cylindrically rolled plate. The contact pressure normal to the surface at the top (N2t) and the bottom (N2b) and friction shear stress at the top (ft) and at the bottom (fb) are in equilibrium with the turbine loads.

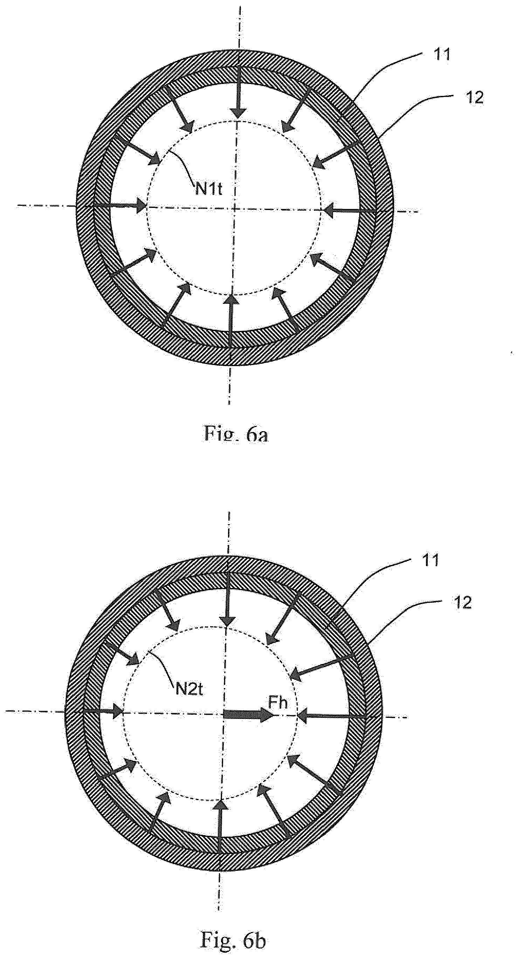

Figure 6a shows the uniform radial contact pressure distribution (N1t), acting normal to the area of contact between the conical rings at the top (11, 12) and which is generated by the vertical force (Fv) at the time of installation of the tower. The pressure (N1t) is a pre-stressed condition which is permanently present after installation, and even might become larger after installation.

When installing the lower end 17 over/in the upper end 16, a pre-stressed condition is obtained. After installation, there follows a certain initial setting period in which the conical contact sides 11a, 12b and 13a, 14b may further slide over each other and the clamping of the conical sides to each other may become more firmly, for example due to operational and/or environmental loads, which may result in a larger pre-stress. The lower end 17 and the upper end 16 are in fact further 'setting' with respect to each other during this period. After a certain amount of the time, the initial post-installation period, the 'setting' may be done and the clamping/contacting of the conical contact sides may become so firmly that the lower end 17 and the upper end 16 are more or less immovable with respect to each other and do not slide with respect to each other.

Figure 6b shows the effect of the action of turbine loads, or other operational loads, e.g. environmental loads, on the uniform distribution (N1t), changing into a distribution (N2t) with lower contact pressure at one side and higher contact pressure at the opposite side, such that the resultant reaction of this contact pressure (N2t) is in equilibrium with the turbine loads. By design the pre-stressed condition is large enough to ensure that the lowest contact pressure between the rings (11,12) is sufficient to prevent slipping at the contact surface, thus providing for a firm connection between the upper end 16 and the lower end 17 of the foundation pile and the upper structure respectively. The same mechanical behavior occurs in the interaction between rings (13, 14) at the bottom of the connection, preventing slipping of the contact surfaces.

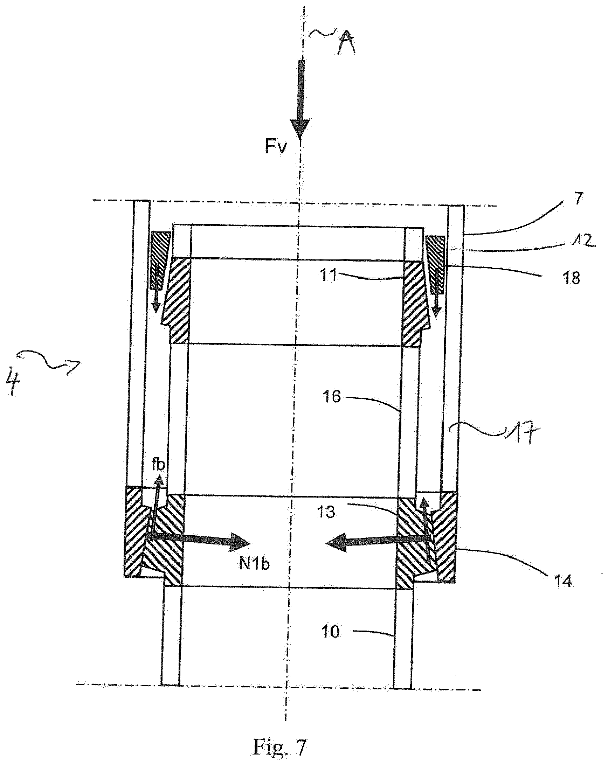

At least one of the conical rings 11, 12, 13 or 14 may be provided as wedge shaped parts 18. The conical ring 11, 12, 13 or 14 is then embodied as an interrupted ring. This may be advantageous for manufacturing while then a number of wedge shaped parts may be manufactured instead of a tubular ring of which one side is to be accurately machined. In a further embodiment, as shown in figure 7, at least one of the wedge shaped parts 18 may be vertically adjustable to adjust the vertical position of the lower end 17 and/or of the second element 7 with respect to the central axis A.

Figure 7 shows the condition during installation before the wedges (18) are inserted after the tower tube (7) has been placed and supported by the contact surfaces between the rings at the bottom of the connection (13,14). The insertion position of individual wedges (18) is adjustable in order to control small differences of alignment of the foundation pile (10) and the tower (7). The elasticity of the structure, in particular the ring (14) and the wedges (18) are designed to allow compensation of this difference of the alignment, e.g. by backing plates between the wedges (18) and the tower tube (7) made of elastic material.

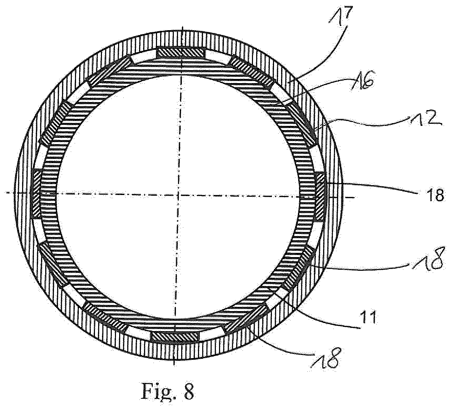

The top view of the connection shown in figure 8 is an example of the position of the wedges 18. Preferably, minimum three wedges 18 are required for a statically determined and stable condition. In this example twelve wedges are shown. Of course, more or less wedge shaped parts may be provided.

Other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

The invention is explained by means of an example showing a foundation pile as first element and a wind turbine as second element. Other first elements may be used as well, for example offshore or onshore piles, multi-legged jackets etc. Other second elements may be provided as well, for example any kind of onshore or offshore platform, e.g. accommodation, power plant, oil or gas production, meteorological etc.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

Many variants will be apparent to the person skilled in the art. All variants are understood to be comprised within the scope of the invention defined in the following claims.

## Claims

1. Assembly, comprising a lower pile (10) having an upper end (16) and an upper superstructure (7) having a lower end (17), said lower pile (10) and said upper superstructure (7) being connected to each other, wherein the upper end (16) of the pile (10) is provided with a conical ring (11; 13) that is conically shaped at one side and the lower end (17) of the superstructure (7) is provided with a conical ring (12; 14) that is conically shaped at one side, such that when engaging the upper end and the lower end, the conical sides of the conical rings contact each other, wherein the conical side (11a; 13a) of the respective conical ring (11, 13) is at an outer side of the upper end (16) of the lower pile (10), wherein the conical side (12b; 14b) of the corresponding conical ring (12, 14) of the lower end (17) of the upper superstructure (7) is at the inner side of the lower end (17) such that the upper end (16) of the lower pile (10) fits inside of the lower end (17) of the upper superstructure (7), or, wherein the conical side of the respective conical ring (11, 13) is at an inner side of the upper end (16), the conical side of the corresponding conical ring (12, 14) of the lower end (17) is at the outer side of the lower end (17) such that the lower end (16) of the upper superstructure fits inside of the upper end (17) of the pile, wherein the conical side (11a; 13a) of the conical ring (11; 13) on the upper end (16) of the lower pile (10) tapers upwardly and the conical side (12b; 14b) of the conical ring (12; 14) of the lower end (17) of the upper superstructure (7) tapers downwardly, and wherein the lower end (17) of the upper superstructure (7) and the upper end (16) of the lower pile (10) each comprise two conical rings (12, 14; 11, 13) positioned approximately parallel to each other and at equal distance with respect to each other.

2. Assembly according to claim 1, wherein the height of the conical rings is smaller than an overlapping length of the upper end and the lower end.

3. Assembly according to claim 1 or 2, wherein the height of the conical ring is less than 1/4th of its diameter.

4. Assembly according to clause 1 or 2, wherein the conical rings are provided as a wall part of the upper end (16) and/or of the lower end (17).

5. Assembly according to any of the preceding claims, wherein, in use, a permanent pre-stressed contact pressure is present perpendicular to the conical contact sides, that is so large that the conical contact sides do not slide with respect to each other due to operational loads on the connection between the pile (10) and the superstructure (7).

6. Pile (10) comprising an upper end (16) that is provided with at least two conical rings (11, 13), preferably positioned approximately parallel to each other, that are conically shaped at one side and that are arranged to contact conical sides of conical rings (12, 14) of a superstructure (7) to provide for a connection between a pile (10) and a superstructure (7) of an assembly according to any of the claims 1 - 5 during use.

7. Method for engaging a lower pile (10) with an upper superstructure (7), comprising providing an upper end (16) at the pile (10) and a lower end (17) at the superstructure (7), further connecting at least two conical rings (11, 13) that are conically shaped at one side on the upper end (16), and providing at least two conical rings (12, 14) on the lower end (17), wherein the height of the conical rings is smaller than an overlapping length of the upper and the lower end (16, 17), such that when engaging the upper end (16) and the lower end (17), the conical sides of the conical rings (11, 13; 12, 14) contact each other, wherein the conical side (11a; 13a) of the respective conical ring (11, 13) is at an outer side of the upper end (16) of the lower pile (10), wherein the conical side (12b; 14b) of the corresponding conical ring (12, 14) of the lower end (17) of the upper superstructure (7) is at the inner side of the lower end (17) such that the upper end (16) of the lower pile (10) fits inside of the lower end (17) of the upper superstructure (7), or, wherein the conical side of the respective conical ring (11, 13) is at an inner side of the upper end (16), the conical side of the corresponding conical ring (12, 14) of the lower end (17) is at the outer side of the lower end (17) such that the lower end (16) of the upper superstructure fits inside of the upper end (17) of the pile, wherein the conical side (11a; 13a) of the conical ring (11; 13) on the upper end (16) of the lower pile (10) tapers upwardly and the conical side (12b; 14b) of the conical ring (12; 14) of the lower end (17) of the upper superstructure (7) tapers downwardly, further moving the superstructure (7) towards the pile (10) until the conical sides of conical rings 11, 13; 12, 14) contact each other.

8. Offshore construction comprising an assembly according to any of the claims 1 - 5.

## Patentansprüche

1. Anordnung, umfassend einen unteren Pfeiler (10) mit einem oberen Ende (16) und einem oberen Aufbau (7) mit einem unteren Ende (17), der untere Pfeiler (10) und der obere Aufbau (7) miteinander verbunden, wobei das obere Ende (16) des Pfeilers (10) versehen ist mit einem konischen Ring (11; 13), der konisch geformt ist an einer Seite, und das untere Ende (17) des Aufbaus (7) versehen ist mit einem konischen Ring (12; 14), der konisch geformt ist an einer Seite, sodass, wenn das obere Ende und das untere Ende in Eingriff sind, die konischen Seiten der konischen Ringe einander berühren, wobei die konische Seite (11a; 13a) des jeweiligen konischen Rings (11, 13) an einer Außenseite des oberen Endes (16) des unteren Pfeilers (10) ist, wobei die konische Seite (12b; 14b) des jeweiligen konischen Rings (12, 14) des unteren Endes (17) des oberen Aufbaus (7) an der Innenseite des unteren Endes (17) ist, sodass das obere Ende (16) des unteren Pfeilers (10) in das untere Ende (17) des oberen Aufbaus (7) passt oder wobei die konische Seite des jeweiligen konischen Rings (11, 13) an einer Innenseite des oberen Endes (16) ist, die konische Seite des jeweiligen konischen Rings (12, 14) des unteren Endes (17) an der Außenseite des unteren Endes (17) ist, sodass das untere Ende (16) des oberen Aufbaus in das obere Ende (17) des Pfeilers passt, wobei die konische Seite (11a; 13a) des konischen Rings (11; 13) am oberen Ende (16) des unteren Pfeilers (10) sich aufwärts verjüngt und die konische Seite (12b; 14b) des konischen Rings (12; 14) des unteren Endes (17) des oberen Aufbaus (7) sich abwärts verjüngt und wobei das untere Ende (17) des oberen Aufbaus (7) und das obere Ende (16) des unteren Pfeilers (10) jeweils zwei konische Ringe (12, 14; 11, 13) umfassen, positioniert ungefähr parallel zueinander und in gleichem Abstand in Bezug aufeinander.

2. Anordnung nach Anspruch 1, wobei die Höhe der konischen Ringe kleiner ist als eine überlappende Länge des oberen Endes und des unteren Endes.

3. Anordnung nach Anspruch 1 oder 2, wobei die Höhe des konischen Rings kleiner ist als ¼ seines Durchmessers.

4. Anordnung nach Anspruch 1 oder 2, wobei die konischen Ringe bereitgestellt sind als ein Wandteil des oberen Endes (16) und/oder des unteren Endes (17).

5. Anordnung nach einem der vorhergehenden Ansprüche, wobei, bei Verwendung, ein permanenter vorgespannter Kontaktdruck senkrecht zu den konischen Kontaktseiten vorhanden ist, der so groß ist, dass die konischen Kontaktseiten aufgrund der betrieblichen Belastungen auf der Verbindung zwischen dem Pfeiler (10) und dem Aufbau (7) in Bezug zueinander nicht gleiten.

6. Pfeiler (10), umfassend ein oberes Ende (16), das versehen ist mit mindestens zwei konischen Ringen (11, 13), bevorzugt positioniert ungefähr parallel zueinander, die konisch geformt sind an einer Seite und die angeordnet sind, um konische Seiten von konischen Ringen (12, 14) eines Aufbaus (7) zu berühren, um für eine Verbindung zwischen einem Pfeiler (10) und einem Aufbau (7) einer Anordnung nach einem der Ansprüche 1 - 5 während der Verwendung zu sorgen.

7. Verfahren, um einen unteren Pfeiler (10) mit einem oberen Aufbau (7) in Eingriff zu bringen, umfassend die Bereitstellung eines oberen Endes (16) an dem Pfeiler (10) und einem unteren Ende (17) an dem Aufbau (7), ferner umfassend mindestens zwei konische Ringe (11, 13), die konisch geformt sind an einer Seite am oberen Ende (16), und Bereitstellung von mindestens zwei konischen Ringen (12, 14) am unteren Ende (17), wobei die Höhe der konischen Ringe kleiner ist als eine überlappende Länge des oberen und des unteren Endes (16, 17), sodass, wenn das obere Ende (16) und das untere Ende (17) in Eingriff sind, die konischen Seiten der konischen Ringe (11, 13; 12, 14) einander berühren, wobei die konische Seite (11a; 13a) des jeweiligen konischen Rings (11, 13) an einer Außenseite des oberen Endes (16) des unteren Pfeilers (10) ist, wobei die konische Seite (12b; 14b) des jeweiligen konischen Rings (12, 14) des unteren Endes (17) des oberen Aufbaus (7) an der Innenseite des unteren Endes (17) ist, sodass das obere Ende (16) des unteren Pfeilers (10) in das untere Ende (17) des oberen Aufbaus (7) passt oder wobei die konische Seite des jeweiligen konischen Rings (11, 13) an einer Innenseite des oberen Endes (16) ist, die konische Seite des jeweiligen konischen Rings (12, 14) des unteren Endes (17) an der Außenseite des unteren Endes (17) ist, sodass das untere Ende (16) des oberen Aufbaus in das obere Ende (17) des Pfeilers passt, wobei die konische Seite (11a; 13a) des konischen Rings (11; 13) am oberen Ende (16) des unteren Pfeilers (10) sich aufwärts verjüngt und die konische Seite (12b; 14b) des konischen Rings (12; 14) des unteren Endes (17) des oberen Aufbaus (7) sich abwärts verjüngt, was den Aufbau (7) weiter zu dem Pfeiler (10) hin bewegt, bis die konischen Seiten von konischen Ringen (11, 13; 12, 14) einander berühren.

8. Offshore-Konstruktion, umfassend eine Anordnung nach einem der Ansprüche 1-5.

## Revendications

1. Ensemble, comprenant un pylône inférieur (10) ayant une extrémité supérieure (16) et une superstructure supérieure (7) ayant une extrémité inférieure (17), ledit pylône inférieur (10) et ladite superstructure supérieure (7) étant reliés l'un à l'autre, dans lequel l'extrémité supérieure (16) du pylône (10) est pourvue d'un anneau conique (11 ; 13) qui est formé de manière conique à un côté et l'extrémité inférieure (17) de la superstructure (7) est pourvue d'un anneau conique (12 ; 14) qui est formé de manière conique à un côté, de telle sorte que lors de l'engagement de l'extrémité supérieure avec l'extrémité inférieure, les côtés coniques des anneaux coniques entrent en contact l'un avec l'autre, dans lequel le côté conique (11a ; 13a) de l'anneau conique respectif (11, 13) est à un côté extérieur de l'extrémité supérieure (16) du pylône inférieur (10), dans lequel le côté conique (12b ; 14b) de l'anneau conique correspondant (12, 14) de l'extrémité inférieure (17) de la superstructure supérieure (7) est au côté intérieur de l'extrémité inférieure (17) de telle sorte que l'extrémité supérieure (16) du pylône inférieur (10) correspond à l'intérieur de l'extrémité inférieure (17) de la superstructure supérieure (7), ou, dans lequel le côté conique de l'anneau conique respectif (11, 13) est à un côté intérieur de l'extrémité supérieure (16), le côté conique de l'anneau conique correspondant (12, 14) de l'extrémité inférieure (17) est au côté extérieur de l'extrémité inférieure (17) de telle sorte que l'extrémité inférieure (16) de la superstructure supérieure correspond à l'intérieur de l'extrémité supérieure (17) du pylône, dans lequel le côté conique (11a ; 13a) de l'anneau conique (11 ; 13) sur l'extrémité supérieure (16) du pylône inférieur (10) s'effile vers le haut et le côté conique (12b ; 14b) de l'anneau conique (12 ; 14) de l'extrémité inférieure (17) de la superstructure supérieure (7) s'effile vers le bas, et dans lequel l'extrémité inférieure (17) de la superstructure supérieure (7) et l'extrémité supérieure (16) du pylône inférieur (10) comprennent chacun deux anneaux coniques (12, 14 ; 11, 13) positionnés approximativement de manière parallèle l'un à l'autre et à une distance égale l'un par rapport à l'autre.

2. Ensemble selon la revendication 1, dans lequel la hauteur des anneaux coniques est inférieure à une longueur de chevauchement de l'extrémité supérieure et de l'extrémité inférieure.

3. Ensemble selon la revendication 1 ou 2, dans lequel la hauteur de l'anneau conique est inférieure à 1/4^{ème} de son diamètre.

4. Ensemble selon la revendication 1 ou 2, dans lequel les anneaux coniques sont fournis en tant que partie de paroi de l'extrémité supérieure (16) et/ou de l'extrémité inférieure (17).

5. Ensemble selon l'une quelconque des revendications précédentes, dans lequel, à l'utilisation, une pression de contact précontrainte permanente est présente perpendiculairement aux côtés de contact coniques, qui est si importante que les côtés de contact coniques ne coulissent pas les uns par rapport aux autres en raison de charges opérationnelles sur la connexion entre le pylône (10) et la superstructure (7) .

6. Pylône (10) comprenant une extrémité supérieure (16) qui est pourvue d'au moins deux anneaux coniques (11, 13), positionnés de préférence de manière approximativement parallèle l'un à l'autre, qui sont formés de manière conique à un côté et disposés de façon à entrer en contact avec des côtés coniques d'anneaux coniques (12, 14) d'une superstructure (7) pour fournir une connexion entre un pylône (10) et une superstructure (7) d'un ensemble selon l'une quelconque des revendications 1 à 5 à l'utilisation.

7. Procédé pour engager un pylône inférieur (10) avec une superstructure supérieure (7), comprenant la fourniture d'une extrémité supérieure (16) au pylône (10) et une extrémité inférieure (17) à la superstructure (7), la connexion en outre d'au moins deux anneaux coniques (11, 13) qui sont formés de manière conique à un côté sur l'extrémité supérieure (16), et la fourniture d'au moins deux anneaux coniques (12, 14) sur l'extrémité inférieure (17), dans lequel la hauteur des anneaux coniques est inférieure à une longueur de chevauchement des extrémités supérieure et inférieure (16, 17) de telle sorte que lors de l'engagement de l'extrémité supérieure (16) avec l'extrémité inférieure (17), les côtés coniques des anneaux coniques (11, 13 ; 12, 14) entrent en contact les uns avec les autres, dans lequel le côté conique (11a ; 13a) de l'anneau conique respectif (11, 13) est à un côté extérieur de l'extrémité supérieure (16) du pylône inférieur (10), dans lequel le côté conique (12b ; 14b) de l'anneau conique correspondant (12, 14) de l'extrémité inférieure (17) de la superstructure supérieure (7) est au côté intérieur de l'extrémité inférieure (17) de telle sorte que l'extrémité supérieure (16) du pylône inférieur (10) correspond à l'intérieur de l'extrémité inférieure (17) de la superstructure supérieure (7), ou, dans lequel le côté conique de l'anneau conique respectif (11, 13) est à un côté intérieur de l'extrémité supérieure (16), le côté conique de l'anneau conique correspondant (12, 14) de l'extrémité inférieure (17) est au côté extérieur de l'extrémité inférieure (17) de telle sorte que l'extrémité inférieure (16) de la superstructure supérieure correspond à l'intérieur de l'extrémité supérieure (17) du pylône, dans lequel le côté conique (11a ; 13a) de l'anneau conique (11 ; 13) de l'extrémité supérieure (16) du pylône inférieur (10) s'effile vers le haut et le côté conique (12b ; 14b) de l'anneau conique (12 ; 14) de l'extrémité inférieure (17) de la superstructure supérieure (7) s'effile vers le bas, déplaçant davantage la superstructure (7) vers le pylône (10) jusqu'à ce que les côtés coniques des anneaux coniques (11, 13 ; 12, 14) entrent en contact les uns avec les autres.

8. Construction offshore comprenant un ensemble selon l'une quelconque des revendications 1 à 5.
